(19) Europäisches Patentamt
European Patent Office
Office européen des brevets

(11) **EP 4 671 828 A1**

(12) **EUROPEAN PATENT APPLICATION**

(43) Date of publication:
**31.12.2025 Bulletin 2026/01**

(21) Application number: **25180701.2**

(22) Date of filing: **04.06.2025**

(51) International Patent Classification (IPC):
***G01S 19/21*** *(2010.01)*

(52) Cooperative Patent Classification (CPC):
**G01S 19/215; G06N 3/045; G06N 3/0464;
G06N 3/08; G06N 3/088; G06N 3/126; G06N 5/01;
G06N 7/01; G06N 20/00; G06N 20/10; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.06.2024 IN 202411049302**

(71) Applicant: **Honeywell International Inc.
Charlotte, NC 28202 (US)**

(72) Inventors:
• **RAJENDRAN, Ramkumar
Charlotte, 28202 (US)**

• **KHAN, Kalimulla
Charlotte, 28202 (US)**
• **J, Kirupakar
Charlotte, 28202 (US)**
• **SAMY, Saravana
Charlotte, 28202 (US)**
• **SON, Robert
Charlotte, 28202 (US)**
• **SHERIFF, Shajahan
Charlotte, 28202 (US)**
• **JINDAL, Saurabh
Charlotte, 28202 (US)**

(74) Representative: **Haseltine Lake Kempner LLP
Cheapside House
138 Cheapside
London EC2V 6BJ (GB)**

(54) **SYSTEMS, APPARATUSES, METHODS, AND COMPUTER PROGRAM PRODUCTS FOR GPS SPOOFING DETECTION**

(57) Systems, apparatuses, methods, and computer program products are provided herein. For example, a method may include access aviation specification data. In some embodiments, the method may include training a generative machine learning model using aviation specification data (504). In some embodiments, the method may include generating synthetic aviation data using the generative machine learning model (506). In some embodiments, the method may include training one or more global positioning system (GPS) spoofing detection machine learning models using the synthetic aviation data and historical aviation operations data (508). In some embodiments, the method may include deploying a first GPS spoofing detection machine learning model of the one or more GPS spoofing detection machine learning models to an edge-based device (510).

FIG. 5

**Description**

**TECHNOLOGICAL FIELD**

Embodiments of the present disclosure relate generally to systems, apparatuses, methods, and computer program products for detecting and responding to GPS spoofing.

**BACKGROUND**

Applicant has identified many technical challenges and difficulties associated with systems, apparatuses, methods, and computer program products for detecting and responding to GPS spoofing. Through applied effort, ingenuity, and innovation, Applicant has solved problems related to systems, apparatuses, methods, and computer program products for detecting and responding to GPS spoofing by developing solutions embodied in the present disclosure, which are described in detail below.

**BRIEF SUMMARY**

Various embodiments described herein relate to systems, apparatuses, methods, and computer program products for detecting and responding to GPS spoofing.

In accordance with one aspect of the disclosure, a system is provided. In some embodiments, the system comprises a cloud-based device. In some embodiments, the cloud-based device comprises memory and one or more processors communicatively coupled to the memory. In some embodiments, the one or more processors are configured to access aviation specification data. In some embodiments, the one or more processors are configured to train a generative machine learning model using aviation specification data. In some embodiments, the one or more processors are configured to generate synthetic aviation data using the generative machine learning model. In some embodiments, the one or more processors are configured to train one or more global positioning system (GPS) spoofing detection machine learning models using the synthetic aviation data and historical aviation operations data. In some embodiments, the one or more processors are configured to deploy a first GPS spoofing detection machine learning model of the one or more GPS spoofing detection machine learning models to an edge-based device.

In some embodiments, the generative machine learning model comprises a generator neural network and a discriminator neural network.

In some embodiments, training the generative machine learning model comprises the one or more processors being further configured to generate preliminary synthetic data by applying the aviation specification data and a noise vector to the generator neural network. In some embodiments, training the generative machine learning model comprises the one or more processors being further configured to generate a prediction indication by sampling the preliminary synthetic data and the aviation specification data using the discriminator neural network. In some embodiments, training the generative machine learning model comprises the one or more processors being further configured to compare the prediction indication to a prediction indication threshold.

In some embodiments, generating the synthetic aviation data using the generative machine learning model comprises the one or more processors being further configured to applying a noise vector to the generative machine learning model.

In some embodiments, training the one or more GPS spoofing detection machine learning models comprises the one or more processors being further configured to perform an unsupervised learning technique.

In some embodiments, the unsupervised learning technique comprises a clustering technique.

In some embodiments, the first GPS spoofing detection machine learning model is configured to perform an isolation forest technique.

In some embodiments, the system comprises an edge-based device. In some embodiments, the edge-based device comprises second memory and one or more second processors communicatively coupled to the second memory. In some embodiments, the one or more second processors are configured to receive the first GPS spoofing detection machine learning model from the cloud-based device. In some embodiments, the one or more second processors are configured to generate GPS spoofing indication data by applying real-time aviation operations data to the first GPS spoofing detection machine learning model. In some embodiments, the one or more second processors are configured to initiate performance of one or more spoofing responsive actions based on the GPS spoofing indication data.

In some embodiments, the GPS spoofing indication data is generated when the edge-based device is disconnected from the cloud-based device.

In some embodiments, the edge-based device is physically located on an aircraft.

In some embodiments, the edge-based device is an electronic flight bag.

In some embodiments, the one or more processors are further configured to receive an edge-based device registration request from the edge-based device. In some embodiments, the edge-based device registration request comprises an edge-based device identification. In some embodiments, the one or more processors are further configured to register the edge-based device based on the edge-based device registration request.

In some embodiments, the one or more processors are further configured to receive an aviation runtime context request from the edge-based device. In some embodiments, the one or more processors are further configured to authenticate the edge-based device.

In some embodiments, the first GPS spoofing detection machine learning model is deployed to the edge-based device in response to authenticating the edge-based device.

In accordance with another aspect of the disclosure, a method is provided. In some embodiments, the method may include accessing aviation specification data. In some embodiments, the method may include accessing aviation specification data. In some embodiments, the method may include training a generative machine learning model using aviation specification data. In some embodiments, the method may include generating synthetic aviation data using the generative machine learning model. In some embodiments, the method may include training one or more global positioning system (GPS) spoofing detection machine learning models using the synthetic aviation data and historical aviation operations data. In some embodiments, the method may include deploying a first GPS spoofing detection machine learning model of the one or more GPS spoofing detection machine learning models to an edge-based device.

In some embodiments, the generative machine learning model comprises a generator neural network and a discriminator neural network.

In some embodiments, training the generative machine learning model comprises generating preliminary synthetic data by applying the aviation specification data and a noise vector to the generator neural network. In some embodiments, training the generative machine learning model comprises generating a prediction indication by sampling the preliminary synthetic data and the aviation specification data using the discriminator neural network. In some embodiments, training the generative machine learning model comprises comparing the prediction indication to a prediction indication threshold.

In some embodiments, generating the synthetic aviation data using the generative machine learning model comprises applying a noise vector to the generative machine learning model.

In some embodiments, the method may include receiving the first GPS spoofing detection machine learning model from a cloud-based device. In some embodiments, the method may include generating GPS spoofing indication data by applying real-time aviation operations data to the first GPS spoofing detection machine learning model. In some embodiments, the method may include initiating performance of one or more spoofing responsive actions based on the GPS spoofing indication data.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for accessing aviation specification data. In some embodiments, the computer program code, in execution with at least one processor, configures the computer program product for training a generative machine learning model using aviation specification data. In some embodiments, the computer program code, in execution with at least one processor, configures the computer program product for generating synthetic aviation data using the generative machine learning model. In some embodiments, the computer program code, in execution with at least one processor, configures the computer program product for training one or more global positioning system (GPS) spoofing detection machine learning models using the synthetic aviation data and historical aviation operations data. In some embodiments, the computer program code, in execution with at least one processor, configures the computer program product for deploying a first GPS spoofing detection machine learning model of the one or more GPS spoofing detection machine learning models to an edge-based device.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

**BRIEF DESCRIPTION OF THE DRAWINGS**

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an example block diagram of an environment in which embodiments of the present disclosure may operate;

FIG. 2 illustrates an example block diagram of an example apparatus that may be specially configured in accordance with an example embodiment of the present disclosure;

FIG. 3 illustrates an example architecture in accordance with one or more embodiments of the present disclosure;

FIG. 4 illustrates an interface component in accordance with one or more embodiments of the present disclosure;

FIG. 5 illustrates a flowchart of an example method in accordance with one or more embodiments of the present disclosure;

FIG. 6 illustrates a flowchart of an example method in accordance with one or more embodiments of the present disclosure;

FIG. 7 illustrates a flowchart of an example method in accordance with one or more embodiments of the present disclosure; and

FIG. 8 illustrates a flowchart of an example method in accordance with one or more embodiments of the present disclosure.

## DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with detecting and responding to global positioning system (GPS) spoofing events. As would be understood by one skilled in the field to which this disclosure pertains, there are numerous example scenarios in which it may be desirable to detect and respond to GPS spoofing events.

In many applications, systems, apparatuses, methods, and computer program products for detecting and responding to GPS spoofing events are desirable. In some implementations, it may be desirable to detect and respond to GPS spoofing events using a cloud-based device and/or an edge-based device (e.g., an electronic flight bag). For example, it may be desirable to detect and respond to GPS spoofing events associated with aircraft so that a GPS spoofing event does not cause an aircraft related accident. In this way, aircraft may be able to identify GPS spoofing detection events and implement responsive actions to overcome a GPS spoofing event.

Example solutions for detecting and responding to GPS spoofing events include using a central computing system to detect and respond to GPS spoofing events. However, such example solutions are inaccurate, unreliable, resource intensive, and suffer from high latency. For example, GPS spoofing events occur relatively infrequently. As a result, such example solutions are inaccurate because the example solutions do not have sufficient access to training data for training to detect and respond to GPS spoofing events. As another example, such example solutions are unreliable because they rely on a central computing system communicating remotely with an aircraft. As a result, aircraft are often unable to reliably connect to the example solutions, such as when then aircraft is in a polar region and/or ocean region. As another example, such example solutions are resource intensive because such example solutions use inefficient computing techniques that consume substantial processing and memory resources. As another example, such example solutions suffer from high latency because of the significant challenges of communicating between such example solutions and aircraft positioned in numerous locations around the world and traveling at high speed. Accordingly, there is a need for systems, apparatuses, methods, and computer program products for detecting and responding to GPS spoofing events in an accurate, reliable, low resource, and low latency manner.

Thus, to address these and/or other issues related to such example solutions, example systems, apparatuses, methods, and computer program products for detecting and responding to GPS spoofing events are disclosed herein. For example, an embodiment, in this disclosure, described in greater detail below, includes a system that includes a cloud-based device. In some embodiments, the cloud-based device is configured to access aviation specification data. In some embodiments, the cloud-based device is configured to train a generative machine learning model using aviation specification data. In some embodiments, the cloud-based device is configured to generate synthetic aviation data using the generative machine learning model. In some embodiments, the cloud-based device is configured to train one or more global positioning system (GPS) spoofing detection machine learning models using the synthetic aviation data and historical aviation operations data. In some embodiments, the cloud-based device is configured to deploy a first GPS spoofing detection machine learning model of the one or more GPS spoofing detection machine learning models to an edge-based device. Accordingly, the systems, apparatuses, methods, and computer program products disclosed herein enable detecting and responding to GPS spoofing events in an accurate, reliable, low resource, and low latency manner.


Example Systems and Apparatuses


Embodiments of the present disclosure herein include systems, apparatuses, methods, and computer program products configured for detecting and responding to global positioning system (GPS) spoofing. It should be readily appreciated that the embodiments of the apparatus, systems, methods, and computer program product described herein may be configured in various additional and alternative manners in addition to those expressly described herein.

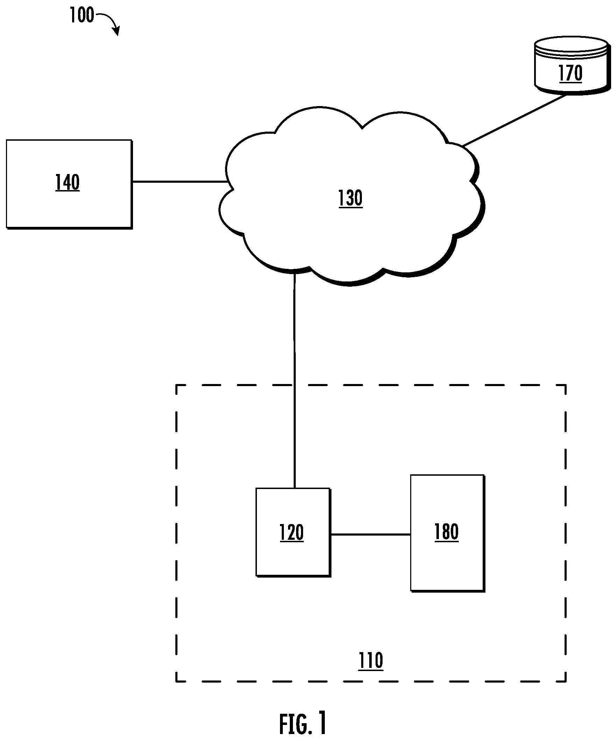

FIG. 1 illustrates an example block diagram of an environment 100 in which embodiments of the present disclosure may operate. Specifically, FIG. 1 illustrates an aircraft 110. In some embodiments, the aircraft 110 may describe any machine, robot, computing devices, and/or apparatus comprised of hardware, software, firmware, and/or any combination thereof, that maneuvers throughout an environment through a medium, such as air. In some contexts, the aircraft 110 is utilized to transport objects, entities (e.g., people, animals, or other beings), and/or other onboard cargo. In some situations, the aircraft 110 may be transporting no object except for the aircraft itself. Examples of the aircraft 110 include airplanes, helicopters, drones, and/or the like. In some embodiments, the aircraft 110 is not limited to the examples listed herein and may include other types of transportation device.

In some embodiments, the aircraft 110 is associated with a determinable location. The determinable location of the aircraft 110 in some embodiments represents an absolute position (e.g., GPS coordinates, latitude and longitude locations, an address, and/or the like) or a relative position of the aircraft 110 (e.g., an identifier representing the location of the aircraft 110 as compared to one or more other aircraft, one or more buildings (e.g., an airport), an enterprise headquarters, or general description in the world for example based at least in part on continent, state, ocean, or other definable region). In some embodiments, the aircraft 110 includes or otherwise is associated with a location sensor and/or software-driven location services that provide the location data corresponding to the aircraft 110. In other embodiments, the location of the aircraft 110 is stored and/or otherwise determinable to one or more systems.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

In some embodiments, the environment 100 includes a cloud-based device 140. In some embodiments, the cloud-based device 140 is electronically and/or communicatively coupled to the aircraft 110, an edge-based device 120, and/or one or more onboard components 180. The cloud-based device 140 may be located remotely from the aircraft 110. In this regard, for example, the cloud-based device 140 may be located in a remote cloud server and electronically and/or communicatively coupled to the aircraft 110, the edge-based device 120, and/or the one or more onboard components 180 via at least the network 130. In some embodiments, the cloud-based device 140 is configured via hardware, software, firmware, and/or a combination thereof, to perform data intake of one or more types of data, such as aviation specification data, synthetic aviation data, historical aviation operations data, preliminary synthetic data, GPS spoofing indication data, real-time aviation operations data, and/or the like.

Additionally, or alternatively, in some embodiments, the cloud-based device 140 is configured via hardware, software, firmware, and/or a combination thereof, to generate and/or transmit command(s) that control, adjust, or otherwise impact operations of one or more of the aircraft 110, the edge-based device 120, and/or the one or more onboard components 180. For example, the cloud-based device 140 may be configured to deploy one or more GPS spoofing detection machine learning models. Additionally, or alternatively, in some embodiments, the cloud-based device 140 is configured via hardware, software, firmware, and/or a combination thereof, to perform data reporting, provide data, and/or other data output process(es) associated with monitoring or otherwise analyzing operations of one or more of the aircraft 110, the edge-based device 120, and/or the one or more onboard components 180. For example, in various embodiments, the cloud-based device 140 may be configured to execute and/or perform one or more operations and/or functions described herein.

In some embodiments, the environment 100 includes the edge-based device 120. In some embodiments, the edge-based device 120 is electronically and/or communicatively coupled to the aircraft 110, the cloud-based device 140, and/or the one or more onboard components 180. The edge-based device 120 may be located remotely from the aircraft 110 (e.g., in a control tower at an airport), in proximity of the aircraft (e.g., with a pilot at an airport gate associated with the aircraft), and/or within the aircraft 110 (e.g., with the pilot in the aircraft). In this regard, for example, the edge-based device 120 may be portable. In some embodiments, the edge-based device 120 is an electronic flight bag. In some embodiments, the edge-based device 120 is configured via hardware, software, firmware, and/or a combination thereof, to perform data intake of one or more types of data, such as aviation specification data, synthetic aviation data, historical aviation operations data, preliminary synthetic data, GPS spoofing indication data, real-time aviation operations data, and/or the like.

Additionally, or alternatively, in some embodiments, the edge-based device 120 is configured via hardware, software, firmware, and/or a combination thereof, to generate and/or transmit command(s) that control, adjust, or otherwise impact operations of one or more of the aircraft 110, the cloud-based device 140, and/or the one or more onboard components 180. For example, the edge-based device 120 may be configured to initiate performance of one or more spoofing responsive actions. Additionally, or alternatively, in some embodiments, the edge-based device 120 is configured via hardware, software, firmware, and/or a combination thereof, to perform data reporting, provide data, and/or other data output process(es) associated with monitoring or otherwise analyzing operations of one or more of the aircraft 110, the cloud-based device 140, and/or the one or more onboard components 180. For example, in various embodiments, the edge-based device 120 may be configured to execute and/or perform one or more operations and/or functions described herein.

In some embodiments, the environment 100 includes the one or more onboard components 180. In some embodiments, the one or more onboard components 180 are electronically and/or communicatively coupled to the aircraft 110, the cloud-based device 140, and/or the edge-based device 120. The one or more onboard components 180 may be located within the aircraft 110. In this regard, for example may be one or more individual components of the aircraft that perform a particular function during operation of the aircraft 110. For example, the one or more onboard components 180 may include one or more of multi-function control and display units (MCDU), flight management systems (FMS), inertial reference systems (IRS), sensors, actuators, primary flight displays, radars (e.g., weather radars, engines, auxiliary power units (APU), enhanced ground proximity warning systems (EGPWS), and/or the like. In this regard, for example, the individual components of the aircraft 110 may include components associated with a particular process or operation performed by the aircraft 110. In some embodiments, the one or more onboard components 180 are physically secured to the aircraft 110.

In some embodiments, the one or more onboard components 180 are configured via hardware, software, firmware, and/or a combination thereof, to perform data intake of one or more types of data, such as aviation specification data, synthetic aviation data, historical aviation operations data, preliminary synthetic data, GPS spoofing indication data, real-time aviation operations data, and/or the like. Additionally, or alternatively, in some embodiments, the one or more onboard components 180 is configured via hardware, software, firmware, and/or a combination thereof, to generate and/or transmit command(s) that control, adjust, or otherwise impact operations of one or more of the aircraft 110, the cloud-based device 140, and/or the edge-based device 120. For example, the one or more onboard components 180 may be configured to initiate performance of one or more spoofing responsive actions. Additionally, or alternatively, in some embodiments, the one or more onboard components 180 are configured via hardware, software, firmware, and/or a combination thereof, to perform data reporting, provide data, and/or other data output process(es) associated with monitoring or otherwise analyzing operations of one or more of the aircraft 110, the cloud-based device 140, and/or the edge-based device 120. For example, in various embodiments, the one or more onboard components 180 may be configured to execute and/or perform one or more operations and/or functions described herein.

The one or more databases 170 may be configured to receive, store, and/or transmit data. For example, the one or more databases 170 may be configured to receive, store, and/or transmit data associated with the aircraft 110, the cloud-based device 140, the edge-based device 120, and/or the one or more onboard components 180. In this regard, for example, the one or more databases 170 may be configured to receive, store, and/or transmit aviation specification data, synthetic aviation data, historical aviation operations data, preliminary synthetic data, GPS spoofing indication data, real-time aviation operations data, and/or the like. The one or more databases 170 may be located remotely from the aircraft 110, in proximity of the aircraft, and/or within the aircraft 110. In some embodiments, the one or more databases 170 may be representative and/or indicative of an aviation specification database 302, a historical aviation operations database 310, an edge-based device registration database 320, a cloud-based GPS spoofing detection machine learning model database 314, an edge-based GPS spoofing detection machine learning model database 332, and/or the like.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the cloud-based device 140 may include the one or more databases 170.

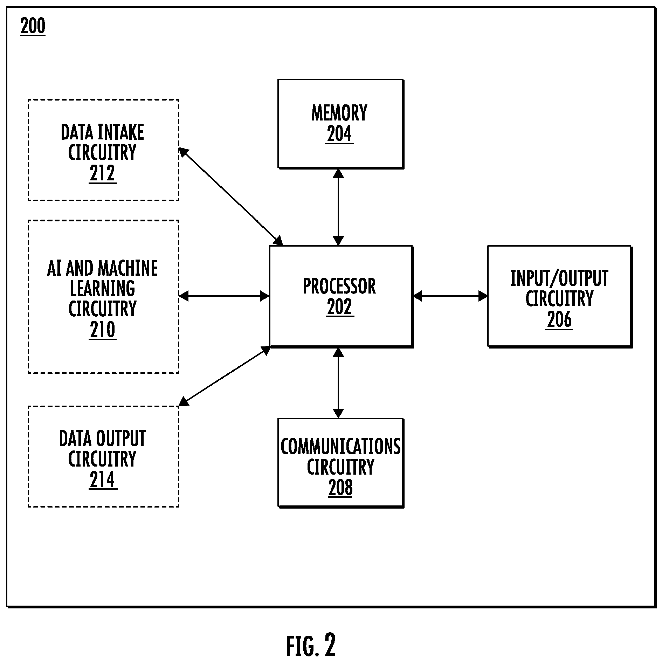

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the cloud-based device 140, the edge-based device 120, the one or more onboard components 180, the one or more databases 170, and/or the aircraft 110. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the cloud-based device 140, the edge-based device 120, and/or the one or more onboard components 180 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuitry 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the aircraft 110. In some embodiments, the data intake circuitry 212 includes hardware, software, firmware, and/or a combination thereof, that communicates with one or more sensor(s) component(s), and/or the like within the aircraft 110 to receive particular data associated with such operations of the aircraft 110. Additionally, or alternatively, in some embodiments, the data intake circuitry 212 includes hardware, software, firmware, and/or a combination thereof, that retrieves particular data associated with the aircraft 110 from one or more data repository/repositories accessible to the apparatus 200.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect to the AI and machine learning circuitry 210.

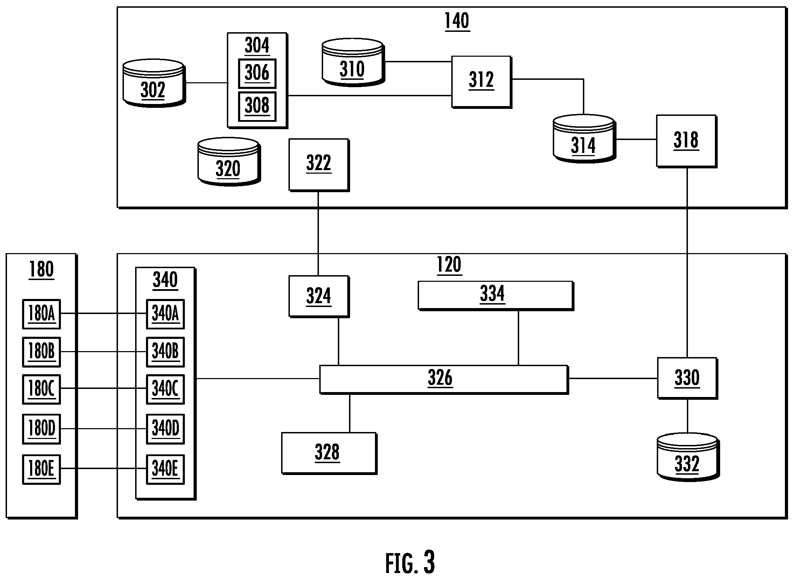

FIG. 3 illustrates an example architecture of the cloud-based device 140, the edge-based device 120, and the one or more onboard components 180. In some embodiments, the cloud-based device 140 is configured to access aviation specification data. For example, the cloud-based device 140 may be configured to access aviation specification data from the aviation specification database 302. Although the aviation specification database 302 is depicted as a component of the cloud-based device 140 in FIG. 3, it would be understood by one skilled in the field to which this disclosure pertains that the aviation specification database 302 may be a separate component located separately from the cloud-based device 140.

In some embodiments, aviation specification data includes one or more items of data indicative of aviation specifications, aviation documents, aviation artifacts and/or the like. For example, aviation specification data may include one or more items of data indicative of flight manuals. As another example, aviation specification data may include one or more items of data indicative of airline bulletins. As another example, aviation specification data may include one or more items of data indicative of flight operations quality assurance (FOQA) manuals. As another example, aviation specification data may include one or more items of data indicative of aviation advisory circulars. As another example, aviation specification data may include one or more items of data indicative of flight safety key performance indicators. As another example, aviation specification data may include one or more items of data indicative of flight efficiency key performance indicators. In this regard, for example, aviation specification data may be indicative of multiple flight scenarios such that it could be used to simulate various combinations of aviation events that would occur in a real-world GPS spoofing event.

In some embodiments, the cloud-based device 140 is configured to train a generative machine learning model 304. In some embodiments, the generative machine learning model 304 is a data entity that describes parameters, hyper-parameters, and/or defined operations of a rules-based and/or machine learning model (e.g., a generative artificial intelligence model) that is configured to generate synthetic aviation data. In this regard, for example, the generative machine learning model may be a generative adversarial network. In some embodiments, the generative machine learning model includes a generator neural network 306 and/or a discriminator neural network 308.

In some embodiments, the cloud-based device 140 is configured to train the generative machine learning model 304 using aviation specification data. In this regard, for example, training the generative machine learning model 304 using aviation specification data may include generating preliminary synthetic aviation data. In some embodiments, the cloud-based device 140 is configured to generate preliminary synthetic aviation data by applying aviation specification data and a noise vector to the generator neural network 306. In some embodiments, the preliminary synthetic aviation data corresponds to the aviation specification data (e.g., the preliminary synthetic aviation data may be synthetically generated aviation specification data). In some embodiments, the noise vector is randomly sampled from a Gaussian distribution and/or a uniform distribution.

In some embodiments, training the generative machine learning model 304 using aviation specification data includes generating a prediction indication. For example, a prediction indication may be generated after the generator neural network 306 has generated preliminary synthetic data. In some embodiments, the cloud-based device 140 is configured to generate a prediction indication using the discriminator neural network 308.

In some embodiments, a prediction indication is based on a real prediction indication. In this regard, in some embodiments, the discriminator neural network 308 is configured to generate a prediction indication by sampling aviation specification data to identify a data point in the aviation specification data and generating a real prediction indication of the identified data point. In some embodiments, a real prediction indication is representative of a probability value determined by the discriminator neural network 308 that the sampled data point in the aviation specification data corresponds to real world data (e.g., aviation specification data) rather than synthetic data (e.g., synthetic aviation data).

Additionally, or alternatively, a prediction indication is based on a synthetic prediction indication. In this regard, the discriminator neural network 308 is configured to generate a prediction indication by sampling synthetic aviation data to identify a data point in the synthetic aviation data and generating a synthetic prediction indication of the identified data point. In some embodiments, a synthetic prediction indication is representative of a probability value determined by the discriminator neural network 308 that the sampled data point in the synthetic aviation data corresponds to real world data (e.g., aviation specification data) rather than synthetic data (e.g., synthetic aviation data).

In some embodiments, after determining a real prediction indication and/or a synthetic prediction indication, the discriminator neural network 308 is configured to determine a prediction indication using the below equation:

$$Prediction\ Indication = Min_G Max_D [E(\log(D(x))) + E(\log(1 - D(G(z))))]$$

where $log(D(x))$ corresponds to the real prediction indication and $log(1 - D(G(z)))$ corresponds to the synthetic prediction indication.

In some embodiments, training the generative machine learning model 304 using aviation specification data includes comparing the prediction indication with a prediction indication threshold. In some embodiments, the generative machine learning model 304 may be iteratively trained until the prediction indication is below the prediction indication threshold. In this regard, the generative machine learning model 304 may be trained until the discriminator neural network 308 is unable to distinguish between the aviation specification data and the preliminary synthetic aviation data generated by the generator neural network 306.

In some embodiments, the cloud-based device 140 is configured to generate synthetic aviation data. In some embodiments, synthetic aviation data includes one or more items of data indicative of operations of one or more aircraft that are associated with a GPS spoofing event. In some embodiments, synthetic aviation data may be data that is generated by the generative machine learning model 304 rather than data that is associated with a real-world event, such as data associated with a real-world GPS spoofing event. In some embodiments, a GPS spoofing event is an event in which a GPS signal associated with the aircraft 110 is being spoofed.

In some embodiments, the cloud-based device 140 is configured to generate synthetic aviation data using the generative machine learning model 304. For example, the cloud-based device 140 may be configured to generate synthetic aviation data after the generative machine learning model 304 has been trained using aviation specification data. In some embodiments, generating the synthetic aviation data using the generative machine learning model 304 includes applying a noise vector to the generative machine learning model 304. In some embodiments, the noise vector is randomly sampled from a Gaussian distribution and/or a uniform distribution.

In some embodiments, the cloud-based device 140 is configured to access historical aviation operations data. For example, the cloud-based device 140 may be configured to access historical aviation operations data from the historical aviation operations database 310. Although the historical aviation operations database 310 is depicted as a component of the cloud-based device 140 in FIG. 3, it would be understood by one skilled in the field to which this disclosure pertains that the historical aviation operations database 310 may be a separate component located separately from the cloud-based device 140.

In some embodiments, historical aviation operations data includes one or more items of data indicative of historical operations of one or more aircraft (e.g., the aircraft 110 and/or one or more other aircraft). For example, historical aviation operations data may include one or more items of data indicative of historical flight data (e.g., a flight taken by an aircraft). As another example, historical aviation operations data may include one or more items of data indicative of quick access recorder (QAR) data. As another example, historical aviation operations data may include one or more items of data indicative of automatic dependent surveillance-broadcast (ADS-B) data. As another example, historical aviation operations data may include one or more items of data indicative of enhanced ground proximity warning systems (EGPWS) data.

In some embodiments, the cloud-based device 140 is configured to train one or more GPS spoofing detection machine learning models 312. In some embodiments, a GPS spoofing detection machine learning model is a data entity that describes parameters, hyper-parameters, and/or defined operations of a rules-based and/or machine learning model that is configured to detect one or more GPS spoofing events. In some embodiments, a GPS spoofing detection machine learning model may be configured to detect one or more GPS spoofing events using an isolation forest technique.

In some embodiments, the cloud-based device 140 is configured to train the one or more GPS spoofing detection machine learning models 312 using synthetic aviation data and/or historical aviation operations data. In some embodiments, training the one or more GPS spoofing detection machine learning models 312 includes performing an unsupervised learning technique using synthetic aviation data and/or historical aviation operations data. For example, the unsupervised learning technique may include a clustering technique.

In some embodiments, the cloud-based device 140 is configured to train multiple different GPS spoofing detection machine learning models. In this regard, for example, the cloud-based device 140 may train different GPS spoofing detection machine learning models for different edge-based devices associated with different aviation runtime contexts. For example, the cloud-based device 140 may be configured to train a first GPS spoofing detection machine learning model for a first aviation runtime context and/or a second GPS spoofing detection machine learning model for a second aviation runtime context.

In some embodiments, the cloud-based device 140 is configured to store the one or more GPS spoofing detection machine learning models 312. In some embodiments, the one or more GPS spoofing detection machine learning models 312 are stored in a cloud-based GPS spoofing detection machine learning model database 314. Although the cloud-based GPS spoofing detection machine learning model database 314 is depicted as a component of the cloud-based device 140 in FIG. 3, it would be understood by one skilled in the field to which this disclosure pertains that the cloud-based GPS spoofing detection machine learning model database 314 may be a separate component located separately from the cloud-based device 140.

In some embodiments, the cloud-based device 140 is configured to receive an edge-based device registration request. In some embodiments, an edge-based device registration request includes an edge-based device identification configured to uniquely identify the edge-based device from which the edge-based device registration request is received. In some embodiments, the cloud-based device 140 may receive an edge-based device registration request via an edge-device manager 322. In some embodiments, an edge-based device registration request may be received from one or more edge-based devices, such as the edge-based device 120. In this regard, for example, the edge-based device 120 may be configured to transmit an edge-based device registration request to the cloud-based device 140. In some embodiments, the edge-based device 120 is configured to transmit the edge-based device registration request to the cloud-based device 140 via a node agent 324.

In some embodiments, the cloud-based device 140 is configured to register an edge-based device from which the cloud-based device receives an edge-based device registration request. In this regard, for example, a registered edge-based device may be configured to receive a GPS spoofing detection machine learning model from the cloud-based device 140. In some embodiments, registering an edge-based device includes storing an edge-based device identification in an edge-based device registration database 320. Although the edge-based device registration database 320 is depicted as a component of the cloud-based device 140 in FIG. 3, it would be understood by one skilled in the field to which this disclosure pertains that the edge-based device registration database 320 may be a separate component located separately from the cloud-based device 140.

In some embodiments, the cloud-based device 140 is configured to receive an aviation runtime context request. In some embodiments, an aviation runtime context request is configured to request a GPS spoofing detection machine learning model of the one or more GPS spoofing detection machine learning models 312. In some embodiments, the cloud-based device 140 may receive an aviation runtime context request via the edge-device manager 322. In some embodiments, an aviation runtime context request may be received from one or more edge-based devices, such as the edge-based device 120. In this regard, for example, the edge-based device 120 may be configured to transmit an aviation runtime context request to the cloud-based device 140. In some embodiments, the edge-based device 120 is configured to transmit the aviation runtime context request to the cloud-based device 140 via the node agent 324.

In some embodiments, the cloud-based device 140 is configured to authenticate an edge-based device, such as the edge-based device 120. In some embodiments, the cloud-based device 140 is configured to authenticate the edge-based device 120 in response to receiving an aviation runtime context request. In some embodiments, the cloud-based device 140 is configured to authenticate the edge-based device 120 by determining if the edge-based device 120 previously registered with the cloud-based device 140. For example, the cloud-based device may determine if an edge-based device identification associated with the edge-based device 120 is stored in the edge-based device registration database 320.

In some embodiments, the cloud-based device 140 is configured to deploy one or more of the GPS spoofing detection machine learning models 312 to the edge-based device 120. For example, the cloud-based device 140 may be configured to deploy a first GPS spoofing detection machine learning model of the one or more GPS spoofing detection machine learning models 312 to the edge-based device 120. In some embodiments, the cloud-based device 140 is configured to deploy one or more of the GPS spoofing detection machine learning models 312 to the edge-based device 120 in response to receiving an aviation runtime context request from the edge-based device 120. In some embodiments, the cloud-based device 140 is configured to deploy one or more of the GPS spoofing detection machine learning models 312 to the edge-based device 120 after the cloud-based device 140 has authenticated the edge-based device 120. In some embodiments, the cloud-based device 140 is configured to deploy one or more of the GPS spoofing detection machine learning models 312 to the edge-based device 120 using a deployment service 318.

In some embodiments, the edge-based device 120 is configured to receive a first GPS spoofing detection machine learning model of the one or more GPS spoofing detection machine learning models 312. In some embodiments, the edge-based device 120 is configured to receive a first GPS spoofing detection machine learning model using a context processing engine 334. In this regard, for example, the context processing engine 334 may be configured to facilitate downloading of the first GPS spoofing detection machine learning model from the cloud-based device 140.

In some embodiments, the edge-based device 120 is configured to distribute the first GPS spoofing detection machine learning model to one or more components of the edge-based device 120 using a model publisher 330. For example, the edge-based device 120 may be configured to distribute the first GPS spoofing detection machine learning model to one or more components of the edge-based device 120 using the model publisher 330 via an edge-based device bus 326. In some embodiments, the edge-based device 120 is configured to store the first GPS spoofing detection machine learning model in an edge-based GPS spoofing detection machine learning model database 332. Although the edge-based GPS spoofing detection machine learning model database 332 is depicted as a component of the edge-based device 120 in FIG. 3, it would be understood by one skilled in the field to which this disclosure pertains that the edge-based GPS spoofing detection machine learning model database 332 may be a separate component located separately from the edge-based device 120.

In some embodiments, the edge-based device 120 is configured to access real-time aviation operations data. In some embodiments, real-time aviation operations data includes one or more items of data indicative of operations of an aircraft that is in operation. In this regard, for example, real-time aviation operations data may include one or more items of data indicative of operations of an aircraft that is preparing for a flight (e.g., turned on and at the gate before a flight), taxiing, taking off, in flight, landing, performing post flight procedures (e.g., turned on and at the gate after a flight), and/or the like. For example, real-time aviation operations data may include one or more items of data indicative of operations of the aircraft 110 while the aircraft 110 is operating.

For example, real-time aviation operations data may include one or more items of data indicative of aircraft engine performance. As another example, real-time aviation operations data may include one or more items of data indicative of aircraft fuel consumption. As another example, real-time aviation operations data may include one or more items of data indicative of weather conditions. As another example, real-time aviation operations data may include one or more items of data indicative of flight trajectory. As another example, real-time aviation operations data may include one or more items of data indicative of aircraft position. As another example, real-time aviation operations data may include one or more items of data indicative of flight plan data.

As another example, real-time aviation operations data may include one or more items of data indicative of position data (e.g., GPS data). As another example, real-time aviation operations data may include one or more items of data indicative of inertial reference system (IRS) data. As another example, real-time aviation operations data may include one or more items of data indicative of distance measuring equipment (DME) data. As another example, real-time aviation operations data may include one or more items of data indicative of very high frequency omni-directional range (VOR) data. As another example, real-time aviation operations data may include one or more items of data indicative of aircraft traffic data.

In some embodiments, the edge-based device 120 is configured to access real-time aviation operations data from the one or more onboard components 180. For example, the edge-based device 120 may be configured to access real-time aviation operations data from an onboard radar component 180A. As another example, the edge-based device 120 may be configured to access real-time aviation operations data from an onboard engine component 180B. As another example, the edge-based device 120 may be configured to access real-time aviation operations data from an onboard auxiliary power unit (APU) component 180C. As another example, the edge-based device 120 may be configured to access real-time aviation operations data from an enhanced ground proximity warning systems (EGPWS) component 180D. As another example, the edge-based device 120 may be configured to access real-time aviation operations data from an onboard flight management system (FMS) component 180E.

In some embodiments, the edge-based device 120 is configured to access real-time aviation operations data from the one or more onboard components 180 using one or more protocol adapters 340. In some embodiments, the edge-based device 120 includes one or more protocol adapters 340 that correspond to the one or more onboard components 180. For example, the edge-based device 120 may include a radar protocol adapter 340A corresponding to the onboard radar component 180A. As another example, the edge-based device 120 may include an engine protocol adapter 340B corresponding to the onboard engine component 180B. As another example, the edge-based device 120 may include an auxiliary power unit (APU) protocol adapter 340C corresponding to the onboard auxiliary power unit (APU) component 180C. As another example, the edge-based device 120 may include an enhanced ground proximity warning systems (EGPWS) protocol adapter 340D corresponding to the enhanced ground proximity warning systems (EGPWS) component 180D. As another example, the edge-based device 120 may include an onboard flight management system (FMS) protocol adapter 340E corresponding to the onboard flight management system (FMS) component 180E. In some embodiments, the one or more protocol adapters 340 are configured to implement a flight management software development kit that enables bidirectional communication between the edge-based device 120 and the one or more onboard components 180.

In some embodiments, the edge-based device 120 is configured to generate GPS spoofing indication data. In some embodiments, GPS spoofing indication data includes one or more items of data indicative of a GPS spoofing event. For example, GPS spoofing indication data may include one or more items of data indicative of an unusual flight pattern of the aircraft 110. As another example, GPS spoofing indication data may include one or more items of data indicative of a sudden change in altitude of the aircraft 110. As another example, GPS spoofing indication data may include one or more items of data indicative of a sudden change in speed of the aircraft 110.

In some embodiments, edge-based device 120 is configured to generate GPS spoofing indication data when the edge-based device 120 is disconnected from the cloud-based device 140. In this regard, for example, the edge-based device 120 may be configured to generate GPS spoofing indication data when the aircraft 110 is located in remote regions (e.g., ocean regions, polar regions, etc.) and connection to the cloud-based device 140 is not possible.

In some embodiments, the edge-based device 120 is configured to generate GPS spoofing indication data using the first GPS spoofing detection machine learning model. In some embodiments, the edge-based device 120 is configured to generate GPS spoofing indication data by applying real-time aviation operations data to the first GPS spoofing detection machine learning model. In some embodiments, the edge-based device 120 is configured to apply real-time aviation operations data to the first GPS spoofing detection machine learning model using a GPS spoofing detection machine learning model engine 328.

In some embodiments, the edge-based device 120 is configured to generate GPS spoofing indication data using the first GPS spoofing detection machine learning model by partitioning the real-time aviation operations data into two data portions. For example, the real-time aviation operations data may be partitioned into two data portions by selecting a feature (e.g., a feature related to the altitude of the aircraft 110) of the real-time aviation operations data, randomly selecting a split value of the feature that is in the range of the feature's maximum and minimum values, and dividing the real-time aviation operations data into two data portions based on the split value.

In some embodiments, the edge-based device 120 is configured to generate GPS spoofing indication data using the first GPS spoofing detection machine learning model by recursively performing the partitioning of the real-time aviation operations data. In some embodiments, the partitioning of the real-time aviation operations data may be recursively performed until all data instances in the real-time aviation operations data are isolated.

In some embodiments, the edge-based device 120 is configured to generate GPS spoofing indication data using the first GPS spoofing detection machine learning model by generating a spoofing impact value for each data instance. In some embodiments, the spoofing impact value for each data instance is indicative of a number of partitions that were required to isolate the data instance. For example, the spoofing impact value may be determined for each data instance using the below equation:

$$Spoofing\ Impact\ Value\ (x,n) = 2^{\frac{-E(h(x))}{C(n)}}$$

where x corresponds to a data instance being evaluated (e.g., for which a spoofing impact value is being generated), n corresponds to the total number of data instances in the real-time aviation operations data, h(x) corresponds to the height of an isolation tree that isolates the data instance x, and c(n) corresponds to a constant that is dependent on the size of the real-time aviation operations data (e.g., how large the real-time aviation operations data is).

In some embodiments, the edge-based device 120 is configured to generate GPS spoofing indication data using the first GPS spoofing detection machine learning model by identifying data instances associated with a spoofing impact value that are indicative of a GPS spoofing event. For example, data instances associated with a low spoofing impact value may be indicative of a GPS spoofing event.

In some embodiments, the edge-based device 120 is configured to initiate performance of one or more spoofing responsive actions. In some embodiments, the edge-based device 120 is configured to initiate performance of one or more spoofing responsive actions based at least in part on GPS spoofing indication data. In this regard, for example, the edge-based device 120 is configured to initiate performance of one or more spoofing responsive actions that include generating a spoofing response interface component 402. In some embodiments, the spoofing response interface component 402 is configured to display GPS spoofing indication data. In some embodiments, the spoofing response interface component 402 is configured to display one or more corrective action recommendations (e.g., recommendations to a pilot of the aircraft 110 for responding to the GPS spoofing event). In some embodiments, the spoofing response interface component 402 is configured to display one or more updated flight plans (e.g., to avoid the GPS spoofing event).

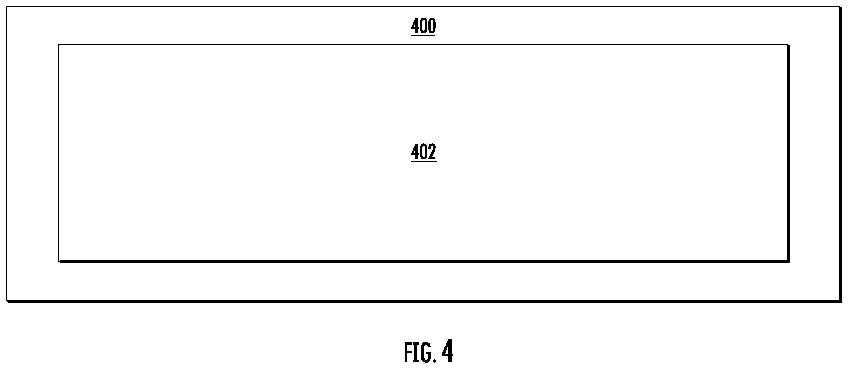

In some embodiments, the edge-based device 120 is configured to initiate performance of one or more spoofing responsive actions that include causing the spoofing response interface component 402 to be rendered on edge-based device interface 400, such as illustrated in FIG. 4. In this regard, for example, the edge-based device interface 400 may be presented on the edge-based device 120.

In some embodiments, the edge-based device 120 is configured to initiate performance of one or more spoofing responsive actions that include causing operation of one or more of the one or more onboard components 180. For example, the edge-based device 120 may be configured to cause the one or more onboard components 180 to carry out an updated flight plan that takes into consideration the GPS spoofing event (e.g., by actuating components of the aircraft 110 to change a heading, altitude, and/or speed of the aircraft 110). As another example, the edge-based device 120 may be configured to cause the one or more onboard components 180 to disregard any GPS signals that are being received. In this regard, for example, the one or more onboard components 180 may reference other navigation information (e.g., inertial reference systems (IRS)). As another example, the edge-based device 120 may be configured to cause one of the one or more onboard components 180 to transmit an alert indicative of the GPS spoofing event to the cloud-based device 140. In this regard, for example, the cloud-based device 140 may be configured to warn other aircraft and/or authorities of the GPS spoofing event.

Example Methods

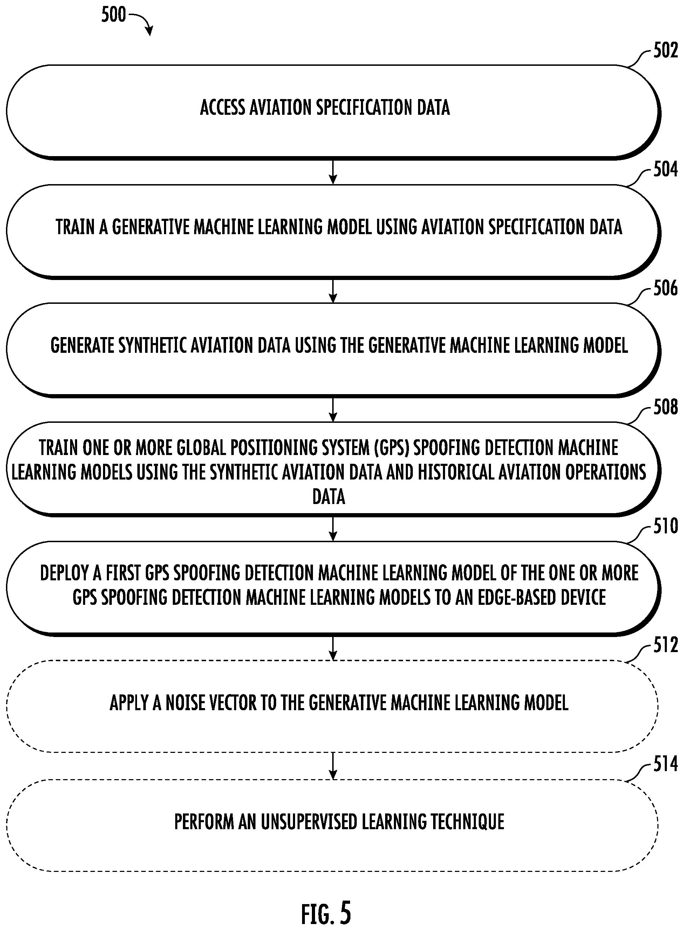

Referring now to FIG. 5, a flowchart providing an example method 500 is illustrated. In this regard, FIG. 5 illustrates operations that may be performed by the cloud-based device 140, the edge-based device 120, the one or more onboard components 180, the aircraft 110, the one or more databases 170, and/or the like. In some embodiments, the method 500 includes operations for deploying a first GPS spoofing detection machine learning model of the one or more GPS spoofing detection machine learning models to an edge-based device. In some embodiments, the example method 500 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 500.

As shown in block 502, the method 500 may include accessing aviation specification data. As described above, in some embodiments, aviation specification data includes one or more items of data indicative of aviation specifications, aviation documents, aviation artifacts and/or the like. For example, aviation specification data may include one or more items of data indicative of flight manuals. As another example, aviation specification data may include one or more items of data indicative of airline bulletins. As another example, aviation specification data may include one or more items of data indicative of flight operations quality assurance (FOQA) manuals. As another example, aviation specification data may include one or more items of data indicative of aviation advisory circulars. As another example, aviation specification data may include one or more items of data indicative of flight safety key performance indicators. As another example, aviation specification data may include one or more items of data indicative of flight efficiency key performance indicators. In this regard, for example, aviation specification data may be indicative of multiple flight scenarios such that it could be used to simulate various combinations of aviation events that would occur in a real-world GPS spoofing event.

As shown in block 504, the method 500 may include training a generative machine learning model using aviation specification data. As described above, in some embodiments, the generative machine learning model is a data entity that describes parameters, hyper-parameters, and/or defined operations of a rules-based and/or machine learning model (e.g., a generative artificial intelligence model) that is configured to generate synthetic aviation data. In this regard, for example, the generative machine learning model may be a generative adversarial network. In some embodiments, the generative machine learning model includes a generator neural network and/or a discriminator neural network.

As shown in block 506, the method 500 may include generating synthetic aviation data using the generative machine learning model. As described above, in some embodiments, synthetic aviation data includes one or more items of data indicative of operations of one or more aircraft that are associated with a GPS spoofing event. In some embodiments, synthetic aviation data may be data that is generated by the generative machine learning model rather than data that is associated with a real-world event, such as data associated with a real-world GPS spoofing event. In some embodiments, a GPS spoofing event is an event in which a GPS signal associated with the aircraft is being spoofed.

In some embodiments, the cloud-based device is configured to generate synthetic aviation data using the generative machine learning model. For example, the cloud-based device may be configured to generate synthetic aviation data after the generative machine learning model has been trained using aviation specification data.

As shown in block 508, the method 500 may include training one or more global positioning system (GPS) spoofing detection machine learning models using the synthetic aviation data and historical aviation operations data. As described above, in some embodiments, historical aviation operations data includes one or more items of data indicative of historical operations of one or more aircraft. For example, historical aviation operations data may include one or more items of data indicative of historical flight data (e.g., a flight taken by an aircraft). As another example, historical aviation operations data may include one or more items of data indicative of quick access recorder (QAR) data. As another example, historical aviation operations data may include one or more items of data indicative of automatic dependent surveillance-broadcast (ADS-B) data. As another example, historical aviation operations data may include one or more items of data indicative of enhanced ground proximity warning systems (EGPWS) data.

In some embodiments, a GPS spoofing detection machine learning model is a data entity that describes parameters, hyper-parameters, and/or defined operations of a rules-based and/or machine learning model that is configured to detect one or more GPS spoofing events. In some embodiments, a GPS spoofing detection machine learning model may be configured to detect one or more GPS spoofing events using an isolation forest technique.

As shown in block 510, the method 500 may include deploying a first GPS spoofing detection machine learning model of the one or more GPS spoofing detection machine learning models to an edge-based device. As described above, in some embodiments, the cloud-based device is configured to deploy one or more of the GPS spoofing detection machine learning models to the edge-based device in response to receiving an aviation runtime context request from the edge-based device. In some embodiments, the cloud-based device is configured to deploy one or more of the GPS spoofing detection machine learning models to the edge-based device after the cloud-based device has authenticated the edge-based device. In some embodiments, the cloud-based device is configured to deploy one or more of the GPS spoofing detection machine learning models to the edge-based device using a deployment service.

As shown in optional block 512, the method 500 may optionally include applying a noise vector to the generative machine learning model. As described above, in some embodiments, generating the synthetic aviation data using the generative machine learning model includes applying a noise vector to the generative machine learning model. In some embodiments, the noise vector is randomly sampled from a Gaussian distribution and/or a uniform distribution.

As shown in optional block 514, the method 500 may optionally include performing an unsupervised learning technique. As described above, in some embodiments, training the one or more GPS spoofing detection machine learning models includes performing an unsupervised learning technique using synthetic aviation data and/or historical aviation operations data. For example, the unsupervised learning technique may include a clustering technique.

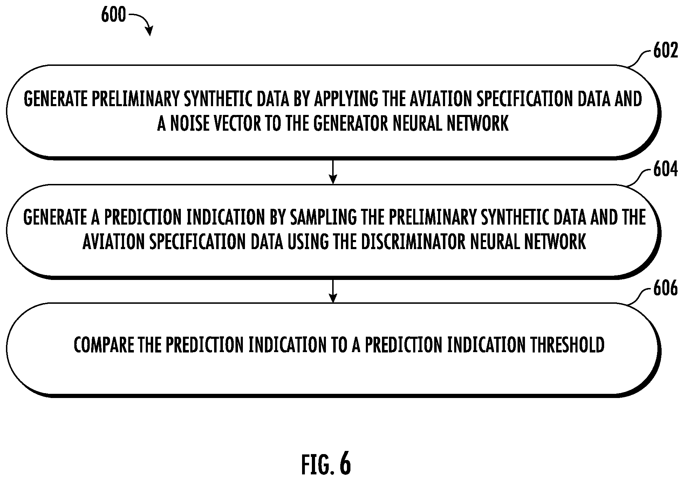

Referring now to FIG. 6, a flowchart providing an example method 600 is illustrated. In this regard, FIG. 6 illustrates operations that may be performed by the cloud-based device 140, the edge-based device 120, the one or more onboard components 180, the aircraft 110, the one or more databases 170, and/or the like. In some embodiments, the method 600 includes operations for training a generative machine learning model. In some embodiments, the example method 600 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 may include generating preliminary synthetic data by applying the aviation specification data and a noise vector to the generator neural network. As described above, in some embodiments, the cloud-based device is configured to train the generative machine learning model using aviation specification data. In this regard, for example, training the generative machine learning model using aviation specification data may include generating preliminary synthetic aviation data. In some embodiments, the cloud-based device is configured to generate preliminary synthetic aviation data by applying aviation specification data and a noise vector to the generator neural network. In some embodiments, the preliminary synthetic aviation data corresponds to the aviation specification data (e.g., the preliminary synthetic aviation data may be synthetically generated aviation specification data). In some embodiments, the noise vector is randomly sampled from a Gaussian distribution and/or a uniform distribution.

As shown in block 604, the method 600 may include generating a prediction indication by sampling the preliminary synthetic data and the aviation specification data using the discriminator neural network. As described above, in some embodiments, training the generative machine learning model using aviation specification data includes generating a prediction indication. For example, a prediction indication may be generated after the generator neural network has generated preliminary synthetic data. In some embodiments, the cloud-based device is configured to generate a prediction indication using the discriminator neural network.

In some embodiments, a prediction indication is based on a real prediction indication. In this regard, in some embodiments, the discriminator neural network is configured to generate a prediction indication by sampling aviation specification data to identify a data point in the aviation specification data and generating a real prediction indication of the identified data point. In some embodiments, a real prediction indication is representative of a probability value determined by the discriminator neural network that the sampled data point in the aviation specification data corresponds to real world data (e.g., aviation specification data) rather than synthetic data (e.g., synthetic aviation data).

Additionally, or alternatively, a prediction indication is based on a synthetic prediction indication. In this regard, the discriminator neural network is configured to generate a prediction indication by sampling synthetic aviation data to identify a data point in the synthetic aviation data and generating a synthetic prediction indication of the identified data point. In some embodiments, a synthetic prediction indication is representative of a probability value determined by the discriminator neural network that the sampled data point in the synthetic aviation data corresponds to real world data (e.g., aviation specification data) rather than synthetic data (e.g., synthetic aviation data).

In some embodiments, after determining a real prediction indication and/or a synthetic prediction indication, the discriminator neural network is configured to determine a prediction indication using the below equation:

$$Prediction\ Indication = Min_G Max_D [E(\log(D(x))) + E(\log(1 - D(G(z))))]$$

where *log*(*D*(*x*)) corresponds to the real prediction indication and *log*(1 - *D*(*G*(*z*))) corresponds to the synthetic prediction indication.

As shown in block 606, the method 600 may include comparing the prediction indication to a prediction indication threshold. As described above, in some embodiments, training the generative machine learning model using aviation specification data includes comparing the prediction indication with a prediction indication threshold. In some embodiments, the generative machine learning model may be iteratively trained until the prediction indication is below the prediction indication threshold. In this regard, the generative machine learning model may be trained until the discriminator neural network is unable to distinguish between the aviation specification data and the preliminary synthetic aviation data generated by the generator neural network.

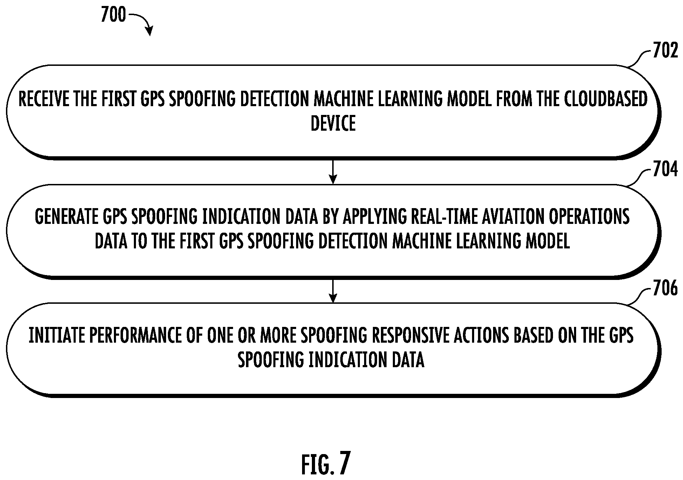

Referring now to FIG. 7, a flowchart providing an example method 700 is illustrated. In this regard, FIG. 7 illustrates operations that may be performed by the cloud-based device 140, the edge-based device 120, the one or more onboard components 180, the aircraft 110, the one or more databases 170, and/or the like. In some embodiments, the method 700 includes operations for initiating performance of one or more spoofing responsive actions based on GPS spoofing indication data. In some embodiments, the example method 700 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 700.

As shown in block 702, the method 700 may include receiving the first GPS spoofing detection machine learning model from the cloud-based device. As described above, in some embodiments, the edge-based device is configured to receive a first GPS spoofing detection machine learning model using a context processing engine. In this regard, for example, the context processing engine may be configured to facilitate downloading of the first GPS spoofing detection machine learning model from the cloud-based device.

As shown in block 704, the method 700 may include generating GPS spoofing indication data by applying real-time aviation operations data to the first GPS spoofing detection machine learning model. As described above, in some embodiments, real-time aviation operations data includes one or more items of data indicative of operations of an aircraft that is in operation. In this regard, for example, real-time aviation operations data may include one or more items of data indicative of operations of an aircraft that is preparing for a flight (e.g., turned on and at the gate before a flight), taxiing, taking off, in flight, landing, performing post flight procedures (e.g., turned on and at the gate after a flight), and/or the like. For example, real-time aviation operations data may include one or more items of data indicative of operations of the aircraft while the aircraft is operating.

For example, real-time aviation operations data may include one or more items of data indicative of aircraft engine performance. As another example, real-time aviation operations data may include one or more items of data indicative of aircraft fuel consumption. As another example, real-time aviation operations data may include one or more items of data indicative of weather conditions. As another example, real-time aviation operations data may include one or more items of data indicative of flight trajectory. As another example, real-time aviation operations data may include one or more items of data indicative of aircraft position. As another example, real-time aviation operations data may include one or more items of data indicative of flight plan data.

As another example, real-time aviation operations data may include one or more items of data indicative of position data (e.g., GPS data). As another example, real-time aviation operations data may include one or more items of data indicative of inertial reference system (IRS) data. As another example, real-time aviation operations data may include one or more items of data indicative of distance measuring equipment (DME) data. As another example, real-time aviation operations data may include one or more items of data indicative of very high frequency omni-directional range (VOR) data. As another example, real-time aviation operations data may include one or more items of data indicative of aircraft traffic data.

In some embodiments, the edge-based device is configured to access real-time aviation operations data from the one or more onboard components. For example, the edge-based device may be configured to access real-time aviation operations data from an onboard radar component. As another example, the edge-based device may be configured to access real-time aviation operations data from an onboard engine component. As another example, the edge-based device may be configured to access real-time aviation operations data from an onboard auxiliary power unit (APU) component. As another example, the edge-based device may be configured to access real-time aviation operations data from an enhanced ground proximity warning systems (EGPWS) component. As another example, the edge-based device may be configured to access real-time aviation operations data from an onboard flight management system (FMS) component.

In some embodiments, the edge-based device is configured to access real-time aviation operations data from the one or more onboard components using one or more protocol adapters. In some embodiments, the edge-based device includes one or more protocol adapters that correspond to the one or more onboard components. For example, the edge-based device may include a radar protocol adapter corresponding to the onboard radar component. As another example, the edge-based device may include an engine protocol adapter corresponding to the onboard engine component. As another example, the edge-based device may include an auxiliary power unit (APU) protocol adapter corresponding to the onboard auxiliary power unit (APU) component. As another example, the edge-based device may include an enhanced ground proximity warning systems (EGPWS) protocol adapter corresponding to the enhanced ground proximity warning systems (EGPWS) component. As another example, the edge-based device may include an onboard flight management system (FMS) protocol adapter corresponding to the onboard flight management system (FMS) component. In some embodiments, the one or more protocol adapters are configured to implement a flight management software development kit that enables bidirectional communication between the edge-based device and the one or more onboard components.

In some embodiments, the edge-based device is configured to generate GPS spoofing indication data. In some embodiments, GPS spoofing indication data includes one or more items of data indicative of a GPS spoofing event. For example, GPS spoofing indication data may include one or more items of data indicative of an unusual flight pattern of the aircraft. As another example, GPS spoofing indication data may include one or more items of data indicative of a sudden change in altitude of the aircraft. As another example, GPS spoofing indication data may include one or more items of data indicative of a sudden change in speed of the aircraft.

In some embodiments, edge-based device is configured to generate GPS spoofing indication data when the edge-based device is disconnected from the cloud-based device. In this regard, for example, the edge-based device may be configured to generate GPS spoofing indication data when the aircraft is located in remote regions (e.g., ocean regions, polar regions, etc.) and connection to the cloud-based device is not possible.

In some embodiments, the edge-based device is configured to generate GPS spoofing indication data using the first GPS spoofing detection machine learning model. In some embodiments, the edge-based device is configured to generate GPS spoofing indication data by applying real-time aviation operations data to the first GPS spoofing detection machine learning model. In some embodiments, the edge-based device is configured to apply real-time aviation operations data to the first GPS spoofing detection machine learning model using a GPS spoofing detection machine learning model engine.

In some embodiments, the edge-based device is configured to generate GPS spoofing indication data using the first GPS spoofing detection machine learning model by partitioning the real-time aviation operations data into two data portions. For example, the real-time aviation operations data may be partitioned into two data portions by selecting a feature (e.g., a feature related to the altitude of the aircraft) of the real-time aviation operations data, randomly selecting a split value of the feature that is in the range of the feature's maximum and minimum values, and dividing the real-time aviation operations data into two data portions based on the split value.

In some embodiments, the edge-based device is configured to generate GPS spoofing indication data using the first GPS spoofing detection machine learning model by recursively performing the partitioning of the real-time aviation operations data. In some embodiments, the partitioning of the real-time aviation operations data may be recursively performed until all data instances in the real-time aviation operations data are isolated.

In some embodiments, the edge-based device is configured to generate GPS spoofing indication data using the first GPS spoofing detection machine learning model by generating a spoofing impact value for each data instance. In some embodiments, the spoofing impact value for each data instance is indicative of a number of partitions that were required to isolate the data instance. For example, the spoofing impact value may be determined for each data instance using the below equation:

$$Spoofing\ Impact\ Value\ (x, n) = 2^{\frac{-E(h(x))}{C(n)}}$$

where x corresponds to a data instance being evaluated (e.g., for which a spoofing impact value is being generated), n corresponds to the total number of data instances in the real-time aviation operations data, h(x) corresponds to the height of an isolation tree that isolates the data instance x, and c(n) corresponds to a constant that is dependent on the size of the real-time aviation operations data (e.g., how large the real-time aviation operations data is).

In some embodiments, the edge-based device is configured to generate GPS spoofing indication data using the first GPS spoofing detection machine learning model by identifying data instances associated with a spoofing impact value that are indicative of a GPS spoofing event. For example, data instances associated with a low spoofing impact value may be indicative of a GPS spoofing event.

As shown in block 706, the method 700 may include initiating performance of one or more spoofing responsive actions based on the GPS spoofing indication data. As described above, for example, the edge-based device is configured to initiate performance of one or more spoofing responsive actions that include generating a spoofing response interface component. In some embodiments, the spoofing response interface component is configured to display GPS spoofing indication data. In some embodiments, the spoofing response interface component is configured to display one or more corrective action recommendations (e.g., recommendations to a pilot of the aircraft for responding to the GPS spoofing event). In some embodiments, the spoofing response interface component is configured to display one or more updated flight plans (e.g., to avoid the GPS spoofing event).

In some embodiments, the edge-based device is configured to initiate performance of one or more spoofing responsive actions that include causing the spoofing response interface component to be rendered on edge-based device interface, such as illustrated in FIG. 4. In this regard, for example, the edge-based device interface may be presented on the edge-based device.

In some embodiments, the edge-based device is configured to initiate performance of one or more spoofing responsive actions that include causing operation of one or more of the one or more onboard components. For example, the edge-based device may be configured to cause the one or more onboard components to carry out an updated flight plan that takes into consideration the GPS spoofing event (e.g., by actuating components of the aircraft to change a heading, altitude, and/or speed of the aircraft). As another example, the edge-based device may be configured to cause the one or more onboard components to disregard any GPS signals that are being received. In this regard, for example, the one or more onboard components may reference other navigation information (e.g., inertial reference systems (IRS)). As another example, the edge-based device may be configured to cause one of the one or more onboard components to transmit an alert indicative of the GPS spoofing event to the cloud-based device. In this regard, for example, the cloud-based device may be configured to warn other aircraft and/or authorities of the GPS spoofing event.

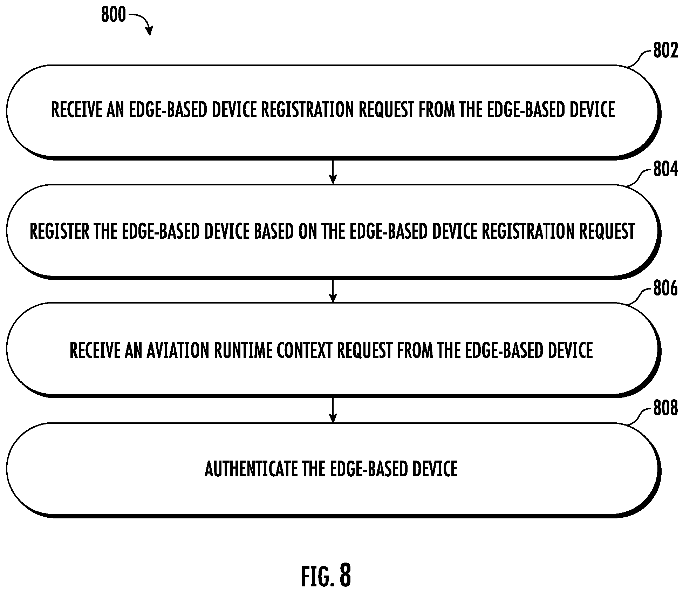

Referring now to FIG. 8, a flowchart providing an example method 800 is illustrated. In this regard, FIG. 8 illustrates operations that may be performed by the cloud-based device 140, the edge-based device 120, the one or more onboard components 180, the aircraft 110, the one or more databases 170, and/or the like. In some embodiments, the method 800 includes operations for registering an edge-based device and/or authenticating an edge-based device. In some embodiments, the example method 800 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 800.

As shown in block 802, the method 800 may include receive an edge-based device registration request from the edge-based device. As described above, in some embodiments, an edge-based device registration request includes an edge-based device identification configured to uniquely identify the edge-based device from which the edge-based device registration request is received. In some embodiments, the cloud-based device may receive an edge-based device registration request via an edge-device manager. In some embodiments, an edge-based device registration request may be received from one or more edge-based devices, such as the edge-based device. In this regard, for example, the edge-based device may be configured to transmit an edge-based device registration request to the cloud-based device. In some embodiments, the edge-based device is configured to transmit the edge-based device registration request to the cloud-based device via a node agent.

As shown in block 804, the method 800 may include register the edge-based device based on the edge-based device registration request. As described above, in some embodiments, the cloud-based device is configured to register an edge-based device from which the cloud-based device receives an edge-based device registration request. In this regard, for example, a registered edge-based device may be configured to receive a GPS spoofing detection machine learning model from the cloud-based device. In some embodiments, registering an edge-based device includes storing an edge-based device identification in an edge-based device registration database.

As shown in block 806, the method 800 may include receive an aviation runtime context request from the edge-based device. As described above, in some embodiments, an aviation runtime context request is configured to request a GPS spoofing detection machine learning model of the one or more GPS spoofing detection machine learning models. In some embodiments, the cloud-based device may receive an aviation runtime context request via the edge-device manager. In some embodiments, an aviation runtime context request may be received from one or more edge-based devices, such as the edge-based device. In this regard, for example, the edge-based device may be configured to transmit an aviation runtime context request to the cloud-based device. In some embodiments, the edge-based device is configured to transmit the aviation runtime context request to the cloud-based device via the node agent.

As shown in block 808, the method 800 may include authenticate the edge-based device. As described above, in some embodiments, the cloud-based device is configured to authenticate the edge-based device in response to receiving an aviation runtime context request. In some embodiments, the cloud-based device is configured to authenticate the edge-based device by determining if the edge-based device previously registered with the cloud-based device. For example, the cloud-based device may determine if an edge-based device identification associated with the edge-based device is stored in the edge-based device registration database.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

**Claims**

1.  A system comprising:
    a cloud-based device comprising memory and one or more processors communicatively coupled to the memory, the one or more processors configured to:

        access aviation specification data;
        train a generative machine learning model using aviation specification data;
        generate synthetic aviation data using the generative machine learning model;
        train one or more global positioning system (GPS) spoofing detection machine learning models using the synthetic aviation data and historical aviation operations data; and
        deploy a first GPS spoofing detection machine learning model of the one or more GPS spoofing detection machine learning models to an edge-based device.

2.  The system of claim 1, wherein the generative machine learning model comprises a generator neural network and a discriminator neural network.

3.  The system of claim 2, wherein training the generative machine learning model comprises the one or more processors being further configured to:

generate preliminary synthetic data by applying the aviation specification data and a noise vector to the generator neural network;

generate a prediction indication by sampling the preliminary synthetic data and the aviation specification data using the discriminator neural network; and

compare the prediction indication to a prediction indication threshold.

4. The system of claim 1, wherein generating the synthetic aviation data using the generative machine learning model comprises the one or more processors being further configured to:
apply a noise vector to the generative machine learning model.

5. The system of claim 1, wherein training the one or more GPS spoofing detection machine learning models comprises the one or more processors being further configured to:
perform an unsupervised learning technique.

6. The system of claim 5, wherein the unsupervised learning technique comprises a clustering technique.

7. The system of claim 1, wherein the first GPS spoofing detection machine learning model is configured to perform an isolation forest technique.

8. The system of claim 1, further comprising:
an edge-based device comprising second memory and one or more second processors communicatively coupled to the second memory, the one or more second processors configured to:

receive the first GPS spoofing detection machine learning model from the cloud-based device;

generate GPS spoofing indication data by applying real-time aviation operations data to the first GPS spoofing detection machine learning model; and

initiate performance of one or more spoofing responsive actions based on the GPS spoofing indication data.

9. The system of claim 8, wherein the GPS spoofing indication data is generated when the edge-based device is disconnected from the cloud-based device.

10. The system of claim 8, wherein the edge-based device is physically located on an aircraft.

11. The system of claim 8, wherein the edge-based device is an electronic flight bag.

12. The system of claim 1, wherein the one or more processors are further configured to:

receive an edge-based device registration request from the edge-based device, wherein the edge-based device registration request comprises an edge-based device identification; and

register the edge-based device based on the edge-based device registration request.

13. The system of claim 1, wherein the one or more processors are further configured to:

receive an aviation runtime context request from the edge-based device; and

authenticate the edge-based device.

14. A method comprising:

accessing aviation specification data;

training a generative machine learning model using aviation specification data;

generating synthetic aviation data using the generative machine learning model;

training one or more global positioning system (GPS) spoofing detection machine learning models using the synthetic aviation data and historical aviation operations data; and

deploying a first GPS spoofing detection machine learning model of the one or more GPS spoofing detection machine learning models to an edge-based device.

15. A computer program product comprising at least one non-transitory computer-readable storage medium having computer program code stored thereon that, in execution with at least one processor, configures the computer program product for:

accessing aviation specification data;
training a generative machine learning model using aviation specification data;
generating synthetic aviation data using the generative machine learning model;
training one or more global positioning system (GPS) spoofing detection machine learning models using the synthetic aviation data and historical aviation operations data; and
deploying a first GPS spoofing detection machine learning model of the one or more GPS spoofing detection machine learning models to an edge-based device.

100

170

140

130

120     180

110

FIG. 1

FIG. 2

FIG. 3

EP 4 671 828 A1

**FIG. 4**

500

502

ACCESS AVIATION SPECIFICATION DATA

504

TRAIN A GENERATIVE MACHINE LEARNING MODEL USING AVIATION SPECIFICATION DATA

506

GENERATE SYNTHETIC AVIATION DATA USING THE GENERATIVE MACHINE LEARNING MODEL

508

TRAIN ONE OR MORE GLOBAL POSITIONING SYSTEM (GPS) SPOOFING DETECTION MACHINE LEARNING MODELS USING THE SYNTHETIC AVIATION DATA AND HISTORICAL AVIATION OPERATIONS DATA

510

DEPLOY A FIRST GPS SPOOFING DETECTION MACHINE LEARNING MODEL OF THE ONE OR MORE GPS SPOOFING DETECTION MACHINE LEARNING MODELS TO AN EDGE-BASED DEVICE

512

APPLY A NOISE VECTOR TO THE GENERATIVE MACHINE LEARNING MODEL

514

PERFORM AN UNSUPERVISED LEARNING TECHNIQUE

FIG. 5

600

602

GENERATE PRELIMINARY SYNTHETIC DATA BY APPLYING THE AVIATION SPECIFICATION DATA AND A NOISE VECTOR TO THE GENERATOR NEURAL NETWORK

604

GENERATE A PREDICTION INDICATION BY SAMPLING THE PRELIMINARY SYNTHETIC DATA AND THE AVIATION SPECIFICATION DATA USING THE DISCRIMINATOR NEURAL NETWORK

606

COMPARE THE PREDICTION INDICATION TO A PREDICTION INDICATION THRESHOLD

FIG. 6

700

702

RECEIVE THE FIRST GPS SPOOFING DETECTION MACHINE LEARNING MODEL FROM THE CLOUDBASED DEVICE

704

GENERATE GPS SPOOFING INDICATION DATA BY APPLYING REAL-TIME AVIATION OPERATIONS DATA TO THE FIRST GPS SPOOFING DETECTION MACHINE LEARNING MODEL

706

INITIATE PERFORMANCE OF ONE OR MORE SPOOFING RESPONSIVE ACTIONS BASED ON THE GPS SPOOFING INDICATION DATA

FIG. 7

800 ⌐

RECEIVE AN EDGE-BASED DEVICE REGISTRATION REQUEST FROM THE EDGE-BASED DEVICE ⌐802

REGISTER THE EDGE-BASED DEVICE BASED ON THE EDGE-BASED DEVICE REGISTRATION REQUEST ⌐804

RECEIVE AN AVIATION RUNTIME CONTEXT REQUEST FROM THE EDGE-BASED DEVICE ⌐806

AUTHENTICATE THE EDGE-BASED DEVICE ⌐808

FIG. 8

Europäisches
Patentamt

European
Patent Office

Office européen
des brevets

# EUROPEAN SEARCH REPORT

**Application Number**

EP 25 18 0701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/042748 A1 (SHABTAI ASAF [IL] ET AL) 7 February 2019 (2019-02-07)<br>* page 2, paragraph 42 - page 7, paragraph 112 *<br>* figures 1-11 *<br>* abstract *<br>----- | 1-15 | INV.<br>G01S19/21 |
| A | US 10 466 700 B1 (CARMACK SCOTT GERARD [US] ET AL) 5 November 2019 (2019-11-05)<br>* column 19, line 14 - column 39, line 66 *<br>* figures 5-13 *<br>* abstract *<br>----- | 1-15 | |
| A | CN 117 353 985 A (UNIV ZHEJIANG TECHNOLOGY) 5 January 2024 (2024-01-05)<br>* page 1, paragraph 1 - page 6, paragraph 92 *<br>* figures 1, 2 *<br>* abstract *<br>----- | 1-15 | |

**TECHNICAL FIELDS SEARCHED (IPC)**

G01S
G06N

The present search report has been drawn up for all claims

| Place of search | Date of completion of the search | Examiner |
|---|---|---|
| Munich | 17 October 2025 | von Walter, Sven-Uwe |

EPO FORM 1503 03.82 (P04C01)

## ANNEX TO THE EUROPEAN SEARCH REPORT
## ON EUROPEAN PATENT APPLICATION NO.

EP 25 18 0701

This annex lists the patent family members relating to the patent documents cited in  the above-mentioned European search report.
The members are as contained in the European Patent Office EDP file on
The European Patent Office is in no way liable for these particulars which are merely given for the purpose of information.

17-10-2025

| Patent document cited in search report | Publication date | Patent family member(s) | Publication date |
|---|---|---|---|
| US 2019042748 A1 | 07-02-2019 | NONE | |
| US 10466700 B1 | 05-11-2019 | NONE | |
| CN 117353985 A | 05-01-2024 | NONE | |

For more details about this annex : see Official Journal of the European Patent Office, No. 12/82